# EUROPEAN PATENT APPLICATION

(11) **EP 4 096 151 A1**
(43) Date of publication of application: **30.11.2022**
(21) Application number: 21175565.7
(22) Date of filing: 24.05.2021
(51) Int. Cl.: H04L 9/32, H04L 29/06, G07C 13/00

(54) **A COMPUTER-IMPLEMENTED METHOD FOR ELECTRONIC VOTING IN A DLT NETWORK**

(71) Applicant: Billon Sp. z o.o., 00-021 Warszawa (PL)
(72) Inventor: HOROSZCZAK, Andrzej, Warszawa (PL); CZERWINSKI, Remigiusz, Warszawa (PL); WODKA, Michal, Warszawa (PL); KALUZA, Robert, Warszawa (PL)
(74) Representative: Markieta, Jaroslaw Franciszek

(57) **Abstract**

The present application relates to a computer-implemented method for electronic voting in a DLT network, comprising steps: before an voting period generating a number of voting tokens equal to the number of entries on the list of voters registered in an electoral commission's node (**C**) of the DLT network; creating a voters' wallet (**v**) on one of devices of each voter; creating a candidates' wallet for each of candidates in the electoral commission's node (**C**) of the DLT network; supplying the voters' wallets with voting tokens, opening the voting period, and transferring voting tokens from voters' wallets to the candidates' wallets in response to voting input of the voter by registering a transaction in a DLT network; creating and transferring noise tokens to the candidates' wallets by registering a transaction in a DLT network; closing the voting period, and for each candidates' wallet discarding noise tokens, calculating the number of tokens transferred to the candidates' wallets as a result of the voting.

## Description

This invention relates to a computer-implemented method for electronic voting in a DLT network.

This invention relates to a computer-implemented method for electronic voting in a DLT network, as well as to the computer program product including instructions recorded on a non-transitory computer readable storage medium and configured, when executed by at least one processor, to cause the at least one processor to perform a method according to the invention.

A distributed ledger networks (DLT) are known in the art, according to the commonly accepted definition, DLT network is a distributed ledger (also called a shared ledger or distributed ledger technology or DLT) is a consensus of replicated, shared, and synchronized digital data geographically spread across multiple sites, countries, or institutions. Unlike with a distributed database, there is no central administrator. The distributed ledger database is spread across several nodes (devices) on a peer-to-peer network, where each replicates and saves a copy of the ledger and updates itself independently. The primary advantage is the lack of central authority. When a ledger update happens, each node constructs the new transaction, and then the nodes vote by consensus algorithm on which copy is correct. Once a consensus has been determined, the other nodes update themselves with the new, correct copy of the ledger. Security is accomplished through cryptographic keys and signatures.

A detailed knowledge of the blockchain systems is well documented and a skilled person is familiar with publications describing *"mechanics"* of the blockchain networks. Textbooks such as The Bitcoin Standard: The Decentralized Alternative to Central Banking, by Saifedean Ammous, published by Wiley; 1st edition (April 24, 2018) ISBN-13: 978-1119473862, Mastering Blockchain: A deep dive into distributed ledgers, consensus protocols, smart contracts, DApps, cryptocurrencies, Ethereum, and more, by Imran Bashir published by Packt Publishing (August 31, 2020) ISBN-13: 978-1839213199, and Mastering Bitcoin: Programming the Open Blockchain, by Andreas M. Antonopoulos published by O'Reilly Media; 2nd edition (July 11, 2017) ISBN-13: 978-1491954386, provide all necessary background knowledge to be familiar with blockchains technology.

In the WO2019/145508 a blockchain-based anonymized cryptographic voting system and methods are disclosed, where a cryptographic voting method includes: obtaining a ballot established on a distributed ledger, the ballot designating answers with corresponding answer identifiers; receiving, a voter token, the voter token conferring a voter vote-value to a voter, the voter token received responsive to a transaction on the distributed ledger, and the transaction addressed to a voter identifier of the voter; determining a target committed vote-value to assign to a target answer of the answers, the target committed vote-value including at least a portion of the voter vote- value; generating a target committed token, the target committed token configured to bind the voter to the target committed vote-value without revealing the target committed vote-value while in a cryptographic form; requesting a first transaction on the distributed ledger, the first transaction transferring the target committed token to the corresponding answer identifier of the target answer; determining a completion committed vote-value to assign to a second answer of the answers, the completion committed vote-value including: a null, or another portion of the voter vote-value; generating a completion committed token configured to: bind the voter to the completion committed vote-value without revealing the completion committed vote-value while in the cryptographic form; and requesting a second transaction on the distributed ledger, and the second transaction transferring the completion committed token to the corresponding answer identifier of the second answer.

The object of the present invention is a computer-implemented method for electronic voting in a DLT network according to claim 1. The method is comprising steps: before a voting period, generating a number of voting tokens equal to the number of entries on the list of voters registered in an electoral commission's node of the DLT network; creating a voters' wallet on one of devices of each voter; creating a candidates' wallet for each of candidates in the electoral commission's node of the DLT network; supplying the voters' wallets with voting tokens, opening the voting period, and transferring voting tokens from voters' wallets to the candidates' wallets in response to voting input of the voter by registering a transaction in a DLT network; creating and transferring noise tokens to the candidates' wallets by registering a transaction in a DLT network; closing the voting period, and for each candidates' wallet discarding noise tokens, calculating the number of tokens transferred to the candidates' wallets as a result of the voting.

Further the method according to the invention is characterized in that candidate's wallets and voters' wallets are active only during the voting period.

Further the method according to the invention is characterized in that in the step of suppling voters' wallet with the voting token only one voting token is supplied per voter's wallet.

Further the method according to the invention is characterized in that in the step of suppling voters' wallet with the voting tokens, a number of colored voting tokens are supplied per voter's wallet, where each colored token can be used only in one of different voting procedures.

Further the method according to the invention is characterized in that each voting token is digitally signed by an electoral commission.

Further the method according to the invention is characterized in that a random number of noise tokens is registered to the candidates' wallets to hide the actual number of votes during the voting period

Further the method according to the invention is characterized in that the additional relay nodes of DLT network are provided by the electoral commission to provide redundancy in the process of transferring voting tokens to candidates' wallets, and to mask the routing of the transferred voting tokens.

Further the method according to the invention is characterized in that wherein voting tokens are provided with a limit allowing transfer only to the candidates' wallets.

The object of the present invention is also a computer program comprising instructions which, when the program is executed by a computer in a DLT network, cause the computer to carry out steps of the method of claims 1 to 8.

The proposed method introduce a more secure and more anonymous voting method for electronic voting. By providing transmitting or relay nodes the routing of tokens during the voting period is hidden and cannot be simply analyzed, hence the additional level of security is introduced to the method. Further by generating noise tokens during the voting period, counting of the tokens by the third party or by the electoral commission brings no true information about the intermediate results of voting, hence additional layer of security is provided to the result of voting. Applying the DLT network adds benefits of distributed ledger technology to the process by providing clear rules of registration of votes in the blocks of the distributed ledger while maintaining the anonymity of voters.

The details of one or more implementations of the present invention are set forth in relation to the accompanying drawings:
- Fig. 1: shows a system for electronic voting according to the invention;
- Fig. 2: shows a block diagram of the pre-voting phase of the method according to the invention;
- Fig. 3: shows a block diagram of the voting phase of the method according to the invention;
- Fig. 4: shows a block diagram of the post-voting phase of the method according to the invention;

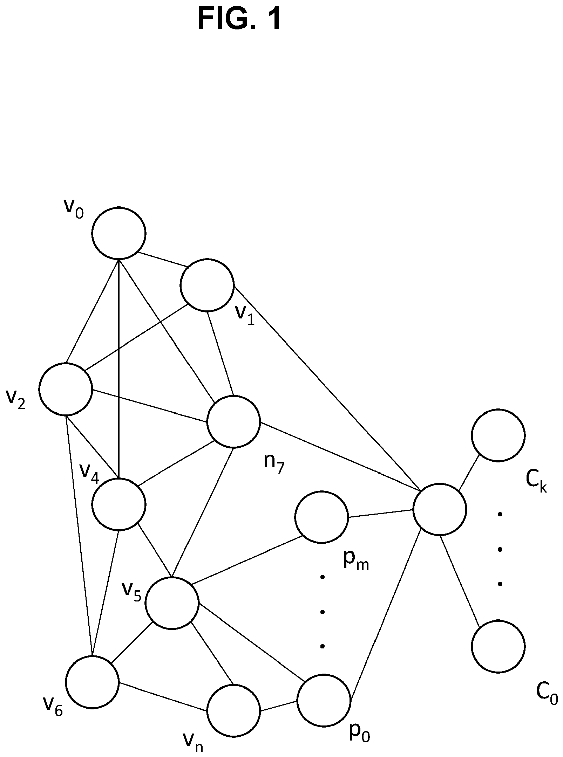

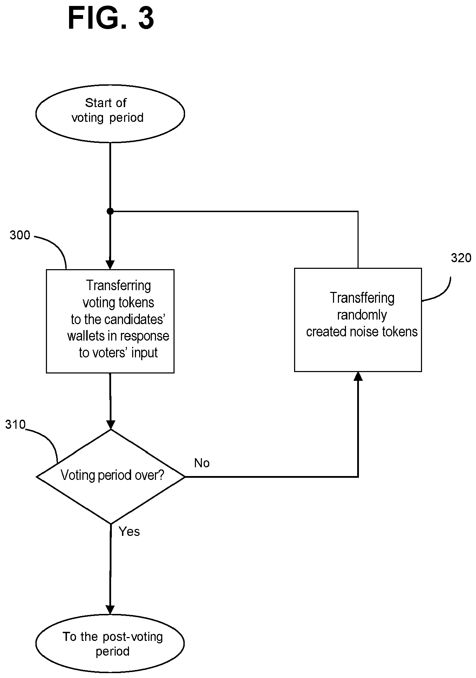

**Fig. 1** shows the a system for electronic voting based on a DLT network in which the method according to the present invention is implemented. Within the system **1** there is a set of nodes **C** run by the electoral commission that is handling the electronic voting procedure. The nodes **C** are nodes in the DLT network which generate voting tokens, and handle candidates' wallets **c**₀ to **c**ₖ. Further within the system **1** there is a number of voters' wallets **v**₀ to **v**ₙ installed on the voters' devices. A wallet **v** is a node of the DLT network. Further within the system **1** there is a number of noise generating nodes **n** and preferably a number of transmitting or relay nodes **p**₀ to **p**ₘ that are controlled by the electoral commission. The technical function of the noise generating nodes **n** is to generate noise tokens which is explained later. The technical function of the transmitting nodes or relay nodes **p** is to relay the transactions of transferring tokens between voters' wallets and candidates' wallets. The operation of the nodes **n** and **p** is described in detail in relation to **Fig. 3****.**

Nodes **C** of the DLT network are capable of generating voting tokens, that are digitally signed according to the private key cryptography. The number of tokens generated is equal to the number of entries on the list of voters registered in an electoral commission's running nodes **C** of the DLT network. The voting tokens are signed with a private key of the electoral commission to provide an evidence that they are authentic. Further nodes **C** are handling candidates' wallets to which voting tokens will be registered to according o the input of the voter. The transfer of the voting token is registered and approved within blocks of a DLT network, which gives to the voting process all the benefits of distributed ledger technology.

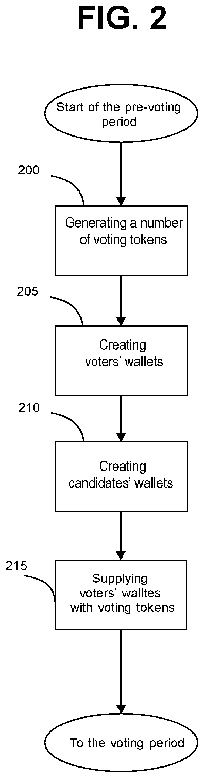

**Fig. 2** shows a general block diagram of electronic voting method as handled in a DLT network. The method operates on the assumption that the voting is possible only during the voting period. It means that voting tokens can be transmitted and registered within candidates' wallets only within certain period of time, e.g. one day, several ours, minutes etc. Hence the method steps can be grouped in three main phases: before an voting period, during the voting period, and after the voting period. This effect can be achieved by assigning to the voting tokens a validity period and limits allowing the transmitting of the voting token only to one of the candidates wallets'.

Before the voting period, nodes **C** of the electoral commission generates voting tokens in step **200.** The number of voting tokens is equal to the number of entries on the list of voters registered in an electoral commission's node **C** of the DLT network.

Next, also before voting period within the systems there are crated voters' wallets **v** in the step **205.** This procedure is handled so that one voters' wallet is given to each of voters. Voters' wallets are distributed among persons having a right to take part in the voting procedure according to the rules of voting established for this particular voting procedure and with a required level of proof to confirm the one voting token is given to one voters' wallet and each voter receives one wallet. Preferably voting tokens are provided with a limit allowing transfer only to the candidates' wallets. The voting rules may implement a different schemes of voting from national scale elections, to the voting for the favorite song organized by the local radio station. Further a several different voting procedures can be run simultaneously or with at least overlapping voting periods. The method according to the invention handles this scenario by generating so called colored voting tokens. In the DLT technology a color means an indicia being a unique identifier of the voting procedure. In this procedure one voters' wallet may be supplied with a number of colored voting tokens, where each colored token can be used only in one of different voting procedures.

In step **210** candidates' wallets are created for each of candidates in the electoral commission's node **C** of the DLT network.

In the preferred embodiment steps of generating voting tokens **200,** creating voters' wallets **205** and creating candidates' wallets **210** are performed sequentially, however in other embodiments steps **200, 205, 210** can be performed in any order in relation to each other before the voting period starts.

In the next step **215** still before the election period starts the voters' wallets are supplied with voting tokens. Each voting token and noise token is digitally signed by the electoral commission. In step **215** voting tokens are not active, and they cannot be registered within the candidates' wallet of the DLT network. Not active means tokens have a validity period assigned within which they can be transferred to the candidates' wallets in response to the voting input of the user. According to the invention, no transaction of transmitting voting tokens to the candidates' wallets can be registered, before or after the voting period.

Having the system set up for the electronic election, the voting period is opened. **Fig. 3** shows steps of the method according to the invention handled in the voting period. The voting tokens are activated with the start of voting period e.g. by setting up a validity period as one of the properties of the voting token that has to comply with limits set on the candidates' wallets which can receive voting tokens only within voting period.

In the voting period, the step **300** is repeated which comprises transferring voting tokens from the voters; wallets to the candidates' wallets. Transferring voting tokens is entered and approved according to the DLT network scheme in respective blocks of kept in the distributed ledger. Transfer of the voting token as depicted in step **300** can refer single voting procedure where each voter has one voting token and he/she is placing his/her token in the respective candidate wallet of his/her choice. However in other embodiment the step **300** may comprise transferring several colored voting tokens that are in the voter's wallet to many candidates participating in many voting procedures in this case color of the token is assigned to the voting procedure. This can be useful when several election procedures at different levels are organized in the same time, e.g. local voting in the municipal elections, run in parallel with state elections, or a federal elections.

However step **300** may also comprise in other embodiment a number of voting tokens of the same color that are used in voting procedure when the voter has a right to choose more than one candidate, as for example in elections in some European countries or in the voting procedures when voter can select a number of options e.g. a favorite songs in the song contest with ten votes, the number of tokens of one color that can be generated depends on the voting rules, in the particular each token can be registered only in one candidates' wallet.

Transferring the voting token means that the transaction is registered in the voter's wallet, that removes the voting token from the voters' wallet and put this particular voting token to the candidates' wallet. Voting process is registered and approved according to the scheme of the DLT network.

As long as the voting period is open which is checked in step **310,** each of the voters can register his/her voting token within the candidates' wallet. During the voting period the main loop of the method according to the invention with a use of nodes **n** transfer randomly generated noise token to candidates' wallets in step **320.** The additional relay nodes **p** of DLT network are provided by the electoral commission to provide redundancy in the process of transferring voting tokens or noise tokens to candidates' wallets, and to mask the routing of the transferred voting tokens.

Adding the noise tokens generated by nodes **n** during the voting period, makes the counting of the voting tokens by the third party or by the electoral commission of no help in establishing a true information about the intermediate results of voting, hence additional layer of security is provided to the result of voting. Further nodes n create additional traffic that makes tracing voters even more difficult. Noise tokens are signed by the electoral commission and presents a secure indicia showing they are noise tokens however in preferred embodiment noise tokens are not simply distinguishable from regular voting tokens and indicia maybe just a class of numbers selected from a set of numbers covering regular voting tokens and noise tokens. A random number of noise tokens is registered to the candidates' wallets to hide the actual number of votes during the voting period.

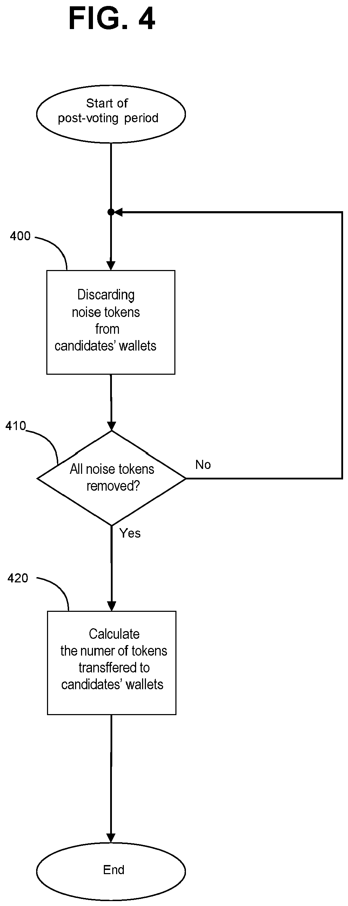

**Fig. 4** shows the situation after the voting period closes. With closing the voting period voting tokens became invalid or expired. Limits set of the candidates' wallets or voting tokens does not allow registration of the transaction of transferring the voting token to the candidates' wallet after the voting period ends.

In the step **400** noise tokens are recognized and removed or discarded from the candidates wallets. This process can be iterative and applied to every single vote independently or in a batch, depending on the method of identification of the noise tokens.

When all noise tokens are removed the process is directed in step **410** to the step of **420** for calculating the voting results i.e. to count the voting tokens in each of the candidates' wallets.

All the method steps can be implemented as a computer program a computer program comprising instructions which, when the program is executed by a computer in a DLT network, cause the computer to carry out steps of the method of claim 1 to 8.

While the present invention has been described in terms of particular embodiments and applications, in both summarized and detailed forms, it is not intended that these descriptions in any way limit its scope to any such embodiments and applications, and it will be understood that many substitutions, changes and variations in the described embodiments, applications and details of the method and system illustrated herein and of their operation may be made by those skilled in the art without departing from the spirit of this invention

## Claims

1. A computer-implemented method for electronic voting in a DLT network, comprising steps:
before an voting period,
generating a number of voting tokens equal to the number of entries on the list of voters registered in an electoral commission's node (C) of the DLT network;
creating a voters' wallet (v) on one of devices of each voter;
creating a candidates' wallet for each of candidates in the electoral commission's node (C) of the DLT network;
supplying the voters' wallets with voting tokens;
opening the voting period, and
transferring voting tokens from voters' wallets to the candidates' wallets in response to voting input of the voter by registering a transaction in a DLT network;
creating and transferring noise tokens to the candidates' wallets by registering a transaction in a DLT network;
closing the voting period, and
for each candidates' wallet discarding noise tokens,
calculating the number of tokens transferred to the candidates' wallets as a result of the voting.

2. The method according to claim 1 wherein candidate's wallets and voters' wallets are active only during the voting period.

3. The method according to claim 1 or 2 wherein in the step of suppling voters' wallet with the voting token only one voting token is supplied per voter's wallet.

4. The method according to claim 1 or 2 wherein in the step of suppling voters' wallet with the voting tokens, a number of colored voting tokens are supplied per voter's wallet, where each colored token can be used only in one of different voting procedures.

5. The method according to any of claims 1 to 4 wherein each voting token is digitally signed by an electoral commission.

6. The method according to any of claims 1 to 5, wherein a random number of noise tokens is registered to the candidates' wallets to hide the actual number of votes during the voting period

7. Method according to any of claims 1 to 6 wherein the additional relay nodes (p) of DLT network are provided by the electoral commission to provide redundancy in the process of transferring voting tokens to candidates' wallets, and to mask the routing of the transferred voting tokens.

8. The method according to any of claims 1 to 7 wherein voting tokens are provided with a limit, allowing transfer of the voting token only to the candidates' wallets.

9. A computer program comprising instructions which, when the program is executed by a computer in a DLT network, cause the computer to carry out steps of the method of claim 1 to 8.
